# EUROPEAN PATENT APPLICATION

(11) **EP 4 664 337 A1**
(43) Date of publication of application: **17.12.2025**
(21) Application number: 25181799.5
(22) Date of filing: 10.06.2025
(51) Int. Cl.: G06F 21/62, G06F 11/30, G06F 12/14, G06F 15/78, G06F 21/70, G06F 21/71, G06F 21/76

(54) **SHARING A SENSOR BETWEEN DIFFERENT ACTORS IN AN INTEGRATED CIRCUIT (IC)**

(30) Priority: 14.06.2024 IN 202441045994
(71) Applicant: NXP B.V., 5656 AG Eindhoven (NL)
(72) Inventor: Bening, Andreas, 5656 AG Eindhoven (NL); Satsangi, Mohit, 5656 AG Eindhoven (NL)
(74) Representative: Miles, John Richard

(57) **Abstract**

Systems and methods for sharing a sensor between different actors in an Integrated Circuit (IC) are discussed. In some embodiments, an electronic circuit may include: first and second cores; and a sensor coupled to the first and second cores, the sensor comprising: (a) a first threshold register coupled to a first hardware access filter, where the first hardware access filter allows the first core to access the first threshold register to the exclusion of the second core, and (b) a second threshold register coupled to second hardware access filter, where the second hardware access filter allows the second core to access the second threshold register to the exclusion of the first core.

## Description

### Field

This disclosure relates generally to electronic circuits, and more specifically, to systems and methods for sharing a sensor between different actors in an Integrated Circuit (IC).

### Background

An Integrated Circuit (IC) is a set of electronic circuits fabricated on a piece of semiconductor material (e.g., silicon). With the advent of modem semiconductor manufacturing techniques, an ever-increasing number of miniaturized transistors and other electronic components may be integrated into a single electronic package or microchip, such as in a microcontroller unit (MCU). Nowadays, a System-on-Chip (SoC) may include most (or all) components of an entire computer or data processing system.

In cases where an IC includes cryptographic or security system, to achieve FIPS140-3 certification, for example, it is important to ensure security regardless of environmental conditions. FIPS140-3 is a U.S. government computer security standard used to approve cryptographic modules.

Conventionally, ensuring security in any environmental condition involves monitoring power, clock, temperature, etc. In most applications, such monitoring should be secure. For example, threshold settings usable to trigger alerts should not be altered by unauthorized software tasks, to prevent operations beyond established boundaries.

### Brief Description of the Drawings

The present disclosure is illustrated by way of example and are not limited by the accompanying figures, in which like references indicate similar elements. Elements in the figures are illustrated for simplicity and clarity and have not necessarily been drawn to scale.
FIG. 1 is a block diagram showing an example of an electronic device, according to some embodiments.
FIG. 2 is a circuit diagram showing an example of a circuit for sharing a sensor between different actors in an Integrated Circuit (IC), according to some embodiments.
FIG. 3 is a flowchart showing an example of a method for sharing a sensor between different actors in an IC, according to some embodiments.
FIG. 4 is a flowchart showing an example of a method for hardware filtering of threshold register access requests, according to some embodiments.

### Detailed Description

In various embodiments, systems and methods described herein may implement multiple thresholds for a single sensor in an Integrated Circuit (IC), each threshold managed by a different actor, owner, or stakeholder (e.g., a processing core). For example, a threshold register specific to security temperature monitoring may be exclusively controlled by a secure core, enhancing system integrity. Other cores may have exclusive control over their own respective threshold registers.

In some implementations, this approach not only minimizes the required area but also segregates the monitoring of system, safety, and security aspects. Additionally, it allows for varied responses to be triggered based on different threshold violations.

Particularly, in the architecture of a System on Chip (SoC) or Microcontroller Unit (MCU), the roles and design goals of security cores, system cores, and safety cores may be distinct. Each type of core may be specifically tailored to meet the varying demands of performance, security, and safety within a system, SoC, or MCU.

For example, a security core may be dedicated to handling cryptographic operations and securing data, including managing secure boot, secure communication, and secure storage. It may be designed with robust isolation and often includes hardware-based security features to protect against attacks and unauthorized access.

A system core may be the primary processing unit responsible for running the main operating system (OS) and applications. These cores may be optimized for performance and efficiency, handling most general computing tasks.

Meanwhile, safety cores may be used in applications requiring functional safety, such as in automotive, industrial, or medical devices. These cores ensure reliability and fault tolerance, incorporating features like error-correcting code (ECC) memory and redundancy, and are designed to comply with industry safety standards.

Each core may be considered a different actor with respect to a single sensor (e.g., a temperature sensor, a clock monitor, a power sensor, etc.). While security applications often require fixed thresholds, other use cases-such as system and/or safety-may need flexible thresholds within these boundaries, depending on traffic load and device mode.

Particularly in the case of temperature sensing, in some cases all temperature monitoring and management may be handled by a secure processing core running secure software and firmware. The secure software may also manage non-security related tasks, including managing various configurations while ensuring all limits are respected, verifying that only authorized users can set different thresholds (authentication), and distributing sensor results (trigger signals) to different actors based on active threshold settings.

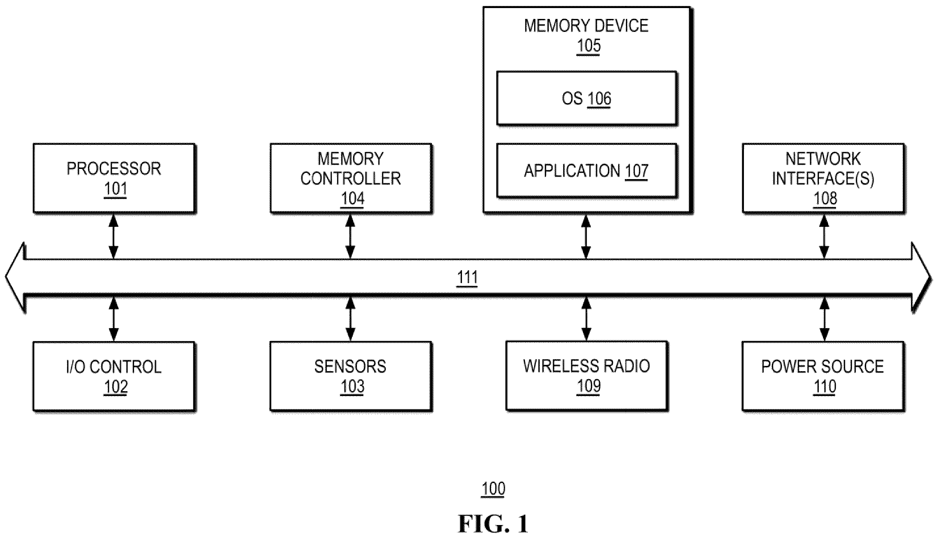

In that regard, FIG. 1 shows an example of electronic device 100 where systems and methods for sharing a sensor between different actors may be implemented. In various embodiments, device 100 may be integrated with electronic circuitry, microprocessors, memory, input output (I/O) logic control, communication interfaces and components, as well as other hardware, firmware, or software. Moreover, one or more components of device 100 may be part of a SoC.

Device 100 includes processor 101 (e.g., a controller, a microcontroller, a digital signal processor, etc.) configured to execute program instructions stored in memory device 105 for implementing various systems and methods described herein. Processor 101 may include components of an integrated circuit, programmable logic device, a logic device formed using one or more semiconductors, and other implementations in silicon or hardware.

In some cases, processor 101 may include two units: (i) a low-power microprocessor, core, or domain, and (ii) a high-power microprocessor, core, or domain. The high-power microprocessor may execute computationally intensive operations, whereas the low-power microprocessor may manage simpler processes, such as detecting inputs from one or more sensors. The low-power processor may also wake or initialize the high-power processor for computationally intensive processes. More generally, processor 101 may include any number of such units or domains.

In device 100, data bus 111 couples its various components and enables data communication between those components. Data bus 111 may be implemented as any suitable combination of one or more bus structures or bus architectures. Device 100 also includes power source 110, such as a battery or an AC-DC power supply.

Sensors 103 may be implemented to detect various properties such as acceleration, temperature, humidity, water, supplied power, proximity, external motion, device motion, sound signals, ultrasound signals, light signals, fire, smoke, carbon monoxide, Global-Positioning-Satellite (GPS) signals, radio frequency (RF), other electromagnetic signals or fields, or the like. As such, sensors 103 may include any one or a combination of temperature sensors, humidity sensors, hazard-related sensors, other environmental sensors, accelerometers, microphones, optical sensors up to and including cameras (e.g., charged coupled-device or video cameras, active or passive radiation sensors, GPS receivers, and RF identification (ID) detectors).

Memory controller 104 and memory device 105 may implement any type of nonvolatile memory or other suitable electronic storage device. Device 100 may include various firmware or software, such as Operating System (OS) 106 maintained as computer executable instructions in memory 105 and executed by processor 101. Moreover, application 107 may include a distance estimation application that implements various aspects of the systems and methods described herein.

Input-output (I/O) control 102 may be configured to receive input from a user or provide information to the user. For example, I/O control 102 may also include mechanical or virtual components that respond to a user input. For example, the user can mechanically move a sliding or rotatable component, or the motion along a touchpad may be detected, and may correspond to a setting of device 100.

Device 100 includes network interfaces 108, such as a mesh network interface for communication with other devices in a wireless mesh network, and an external network interface for network communication, such as via the Internet. Wireless radio system 109 may be used for wireless communication with other devices via network interface 108 and for multiple, different wireless communications systems. For instance, radio system 109 may include a radio device, antenna, and chipset implemented for any given wireless communications technology, such as, for example, Wi-Fi, BLUETOOTH, Mobile Broadband, BLE, point-to-point IEEE 802.15.4, etc.

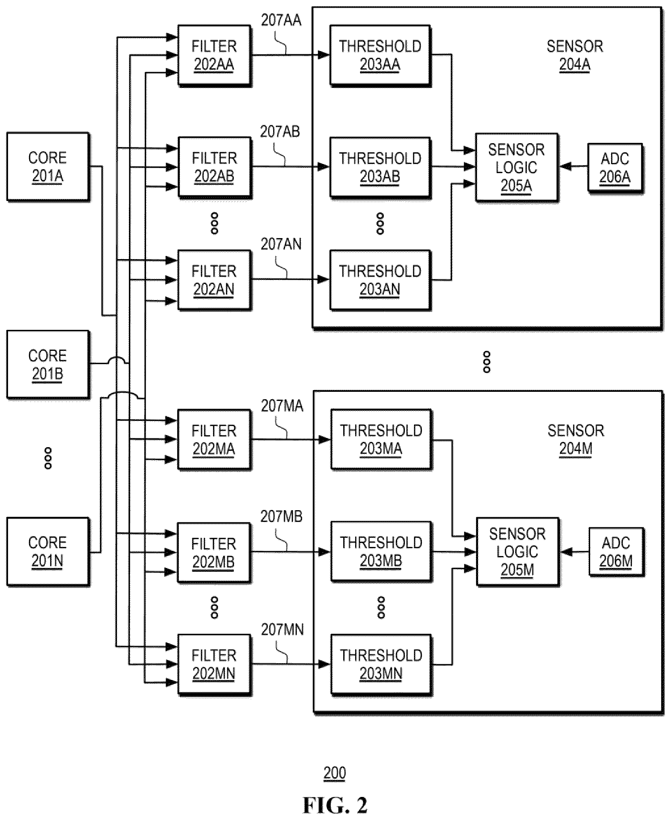

FIG. 2 is a circuit diagram showing an example of circuit 200 for sharing a sensor between different actors in an IC. Particularly, circuit 200 may be disposed within any MCU or SoC comprising any of the components shown in FIG. 1 (e.g., processor 101).

As shown, actors 201A-N (e.g., cores) may have exclusive access, though hardware filters 202AA-MN to their respective threshold register sets 203AA-MN of sensors 204A-M (e.g., temperature sensors). Sensor logic 205A of sensor 204A may receive threshold values from threshold register sets 203AA-AN, whereas sensor logic 205A of sensor 204A may have access to threshold register sets 203AA-AN. In this way, each of sensors 204A-M may be securely shared across cores 201A-N, each of cores 201A-N having ownership of a respective register sets in each sensor.

Sensor logic 205A may receive measurement or telemetry data (e.g., temperature) from Analog-to-Digital Converter (ADC) 206A, and sensor logic 205M may receive measurement or telemetry data from ADC 206M. Moreover, sensor logic 205A may include a comparator configured to compare threshold values stored in threshold register sets 203AA-203AN against data received from ADC 206A, and sensor logic 205M may be configured to compare threshold values stored in threshold register sets 203MA-203MN against data received from ADC 206M.

**In** various embodiments, cores 201A-N may include security, safety, and system cores, each core executing a respective application, software, or firmware. Each of cores 201A-N may have a different threshold (e.g., to trigger an alert), and different thresholds may have static or varying values (e.g., context or policy based).

For example, security thresholds may be established by a secure core's software and may remain fixed as per a security policy. System and safety thresholds may be dynamic, adjustable according to operating conditions such as power modes, and managed directly by the corresponding cores independently of the secure core.

System and safety requirements may differ from security requirements. Security primarily involves preventing denial of service or unsafe threshold settings caused by rogue software, whereas safety is concerned with human safety during operation. Safety thresholds for temperature may be dynamic, occasionally set to a higher threshold for a short period due to power management or operational modes. In contrast, security threshold may be fixed to a limit, and breaching this limit may indicate a potential security issue.

Since safety software normally does not operate in a secure environment, using safety thresholds for security purposes is generally inappropriate. Additionally, in some cases, breaches of safety and security thresholds may trigger separate responses, emphasizing the distinct roles and responses required for safety and security within the system.

Referring to circuit 200, access to each configuration register set may be controlled by filters 202AA-MN, which may perform hardware access filtering (e.g., based on bus master IDs) to ensure that only the assigned core can modify or write to it, to the exclusion of all other cores.

Cores 201A-N may be coupled to hardware filters 202AA-MN via any suitable IC interconnect bus technology. Each of cores 201A-N may have its own dedicated bus master ID which filters 202AA-MN may use to allow or deny access to a group of threshold registers. Additionally, or alternatively, filtering may be performed using a core's TRUSTZONE ID, or the like.

The configuration of filters 202AA-MN with correct bus master IDs may be either permanently set during SoC integration for a static configuration or modified via the MCU's Extended Resource Domain Controller (XRDC) settings, or similar mechanisms.

As such, environmental sensing using circuit 200 may involve multiple actors who set different thresholds, enabling the separation of safety and security management related to environmental conditions sensing (e.g., temperature, etc.). This independent management of thresholds allows for the use of a single sensor by multiple actors.

Security thresholds, which may only be accessible to the secure core, may be static and locked to prevent unauthorized modifications. These fixed security thresholds may be configured by secure software, whereas system software may dynamically adjust other thresholds based on operational modes.

This setup may relieve the secure core from handling environmental thresholds for system and safety cores. Also, by utilizing the same sensor for system, security, and safety roles, circuit 200 reduces die area and enhances resource utilization.

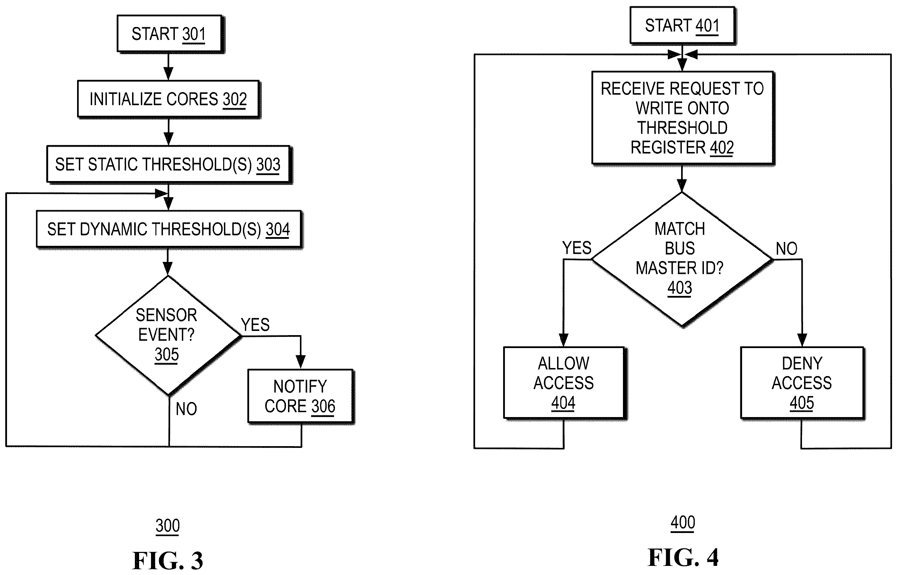

FIG. 3 is a flowchart showing an example of method 300 for sharing a sensor between different actors in an IC. In various embodiments, method 300 may be performed, at least in part, by circuit 200 of FIG. 2.

Method 300 begins at 301. At 302, cores 201A-N are initialized along with their respective applications, software, or firmware (e.g., security, safety, and system). At 303, a security core may set a fixed threshold value in a corresponding threshold register set. At 304, a safety or system core may set a variable threshold value in a corresponding threshold register set.

At 305, if sensor logic 205A-N detects a sensor event (e.g., a temperature value received from ADC 206 is greater than a temperature threshold value in a threshold register set, at 306 the sensor logic may indicate or notify one or more cores of the breach or violation.

In some cases, only the core that owns a threshold may be notified of a violation of that threshold. In other cases, the security core may be notified of each violation, along with a time stamp and an indication of the appropriate threshold actor. In yet other cases, a first actor may be notified of a violation of a second actor's threshold, and the second actor may be notified of a violation of the first actor's threshold.

Method 300 returns to 304 for continued monitoring and dynamic threshold updates, for example, based upon a changing context (e.g., transitioning in or out of a power mode).

FIG. 4 is a flowchart showing an example of a method for hardware filtering of threshold register access requests. In various embodiments, method 400 may be performed, at least in part, by hardware filters 203AA-MN of FIG. 2.

Method 400 begins at 401. At 402, a hardware filter (e.g., 202AA) may receive a threshold register write request from any of cores (e.g., 201A). At 403, hardware filter 202AA may determine whether the bus master ID of core 201A, as indicated in the request, matches the ID of the exclusive actor for the threshold register (e.g., 203AA), as hardcoded at the factory.

If so, at 404, hardware filter 202AA may allow core 201A access to threshold register 203AA and write it may write a threshold value onto that register. Otherwise, at 405, hardware filter 202AA may deny access to register 203AA.

As such, systems and methods for sharing a sensor between different actors in an IC are described. In an illustrative, non-limiting embodiment, an electronic circuit, may include first and second cores; and a sensor coupled to the first and second cores, the sensor including: (a) a first threshold register coupled to a first hardware access filter, where the first hardware access filter allows the first core to access the first threshold register to the exclusion of the second core, and (b) a second threshold register coupled to second hardware access filter, where the second hardware access filter allows the second core to access the second threshold register to the exclusion of the first core.

The sensor may include a comparator coupled to an ADC and to the first and second threshold registers. For example, the sensor may include an environmental sensor. The comparator may be configured to compare a sensor value obtained from the ADC against a threshold value stored in a selected one of the first or second threshold registers.

The sensor may be configured to: in response to a first comparison between a first value obtained by the ADC against a first threshold value stored in the first threshold register, output a first indication; or in response to a second comparison between the first value or a second value obtained by the ADC against a second threshold value stored in the second threshold register, output a second indication.

The sensor may be configured to send the first indication to the first core and send the second indication to the second core. Additionally, or alternatively, the sensor may be configured to send the first indication to the second core and send the second indication to the first core.

The first and second cores may be selected from the group consisting of: system, security, or safety cores. The first core may include a security core configured to write a fixed threshold value in the first threshold register, and the second core may include a system of safety core configured to write a variable threshold value in the second threshold register.

The first hardware access filter only allows write access to the first threshold register in response to a request comprising a bus master ID of the first core, and wherein the second hardware access filter only allows write access to the second threshold register in response to a request comprising a bus master ID of the second core.

The electronic circuit may further include a third core coupled to the sensor, where the first hardware access filter allows the first core to access the first threshold register to the exclusion of the third core, and where the second hardware access filter allows the second core to access the second threshold register to the exclusion of the third core. The sensor may also include: (c) a third threshold register coupled to a third hardware access filter, where the third hardware access filter allows the third core to access the third threshold register to the exclusion of the first and second cores. The third hardware access filter may only allow write access to the third threshold register in response to a request comprising a bus master ID of the third core.

In another illustrative, non-limiting embodiment, a chip may include a system core, a security core, and a safety core; and an environmental sensor coupled to the system, security, and safety cores, the environmental sensor comprising: (a) a first threshold register coupled to a first hardware access filter, where the first hardware access filter allows the system core to access the first threshold register to the exclusion of the security and safety cores, (b) a second threshold register coupled to a second hardware access filter, wherein the second hardware access filter allows the security core to access the second threshold register to the exclusion of the system and safety cores, and (c) a third threshold register coupled to a third hardware access filter, where the third hardware access filter allows the safety core to access the third threshold register to the exclusion of the system and security cores.

The comparator may be configured to compare a sensor value obtained from the ADC against a threshold value stored in a selected one of the first, second, or third threshold registers. The sensor may be configured to: in response to a first comparison between a first value obtained by the ADC against a first threshold value stored in the first threshold register, output a first indication; in response to a second comparison between the first value or a second value obtained by the ADC against a second threshold value stored in the second threshold register, output a second indication; or in response to a third comparison between the first value, the second value, or a third value obtained by the ADC against a third threshold value stored in the third threshold register, output a third indication. The sensor may be configured to send the first indication to the system core, send the second indication to the security core, and send the third indication to the safety core.

In yet another illustrative, non-limiting embodiment, a method may include: receiving, at a first hardware access filter, a first request to write a first value onto a first threshold register of a temperature sensor shared between the first core and a second core; and at least one of: (a) in response to the first request indicating an identity of the first core, writing the first value onto the first threshold register; or (b) in response to the first request indicating an identity of the second core, denying the request.

The method may also include receiving, at a second hardware access filter, a second request to write a second value onto a second threshold register of the temperature sensor; and at least one of: (a) in response to the second request indicating an identity of the second core, writing the second value onto the second threshold register; or (b) in response to the request indicating an identity of the first core, denying the second request.

The method may further include receiving, at a third hardware access filter, a third request to write a third value onto a third threshold register of the temperature sensor, wherein the temperature sensor is shared between the first, second, and third cores; and at least one of: (a) in response to the third request indicating an identity of the third core, writing the third value onto the third threshold register; or (b) in response to the third request indicating an identity of the first or second cores, denying the second request.

As such, systems and methods outlined here adopt flexible strategies that incorporate multiple and independent thresholds tailored to meet the requirements of actors in system, safety, and security. These systems and methods support diverse and autonomous reactions to different types of threshold violations.

Utilizing a unified sensor for all applications-system, safety, and security-may reduce the space needed on the chip. Additionally, in secure systems, the responsibility of managing system sensors can be removed from the security core. Access to corresponding threshold registers may be controlled through hardware access filters, such as those based on bus master IDs.

In many implementations, systems and methods described herein may be incorporated into a wide range of electronic devices including, for example, computer systems or Information Technology (IT) products; consumer devices or appliances; scientific instrumentation; industrial robotics; medical or laboratory electronics; transportation vehicles such as automobiles, buses, trucks, trains, watercraft, aircraft, etc.; military equipment, etc.

For sake of brevity, conventional techniques have not been described in detail herein. Furthermore, the connecting lines shown in the various figures contained herein have been intended to illustrate relationships (e.g., logical) or physical couplings (e.g., electrical) between the various elements. It should be noted, however, that alternative relationships and connections may be used in other embodiments. Moreover, circuitry described herein may be implemented either in silicon or another semiconductor material or alternatively by software code representation thereof.

Although various systems and methods are described herein with reference to specific embodiments, modifications and changes may be made without departing from the scope of the present disclosure, as set forth in the claims below. Accordingly, the specification and figures are to be regarded in an illustrative rather than a restrictive sense, and all such modifications are intended to be included. Any benefits, advantages, or solutions to problems that are described herein regarding specific embodiments are not intended to be construed as a critical, required, or essential feature or element of any or all the claims.

Reference is made herein to "configuring" a device or a device "configured to" perform some operation(s). This may include selecting predefined logic blocks and logically associating them. It may also include programming computer software-based logic of a retrofit control device, wiring discrete hardware components, or a combination thereof. Such configured devices are physically designed to perform the specified operation(s).

Unless stated otherwise, terms such as "first" and "second" are used to arbitrarily distinguish between the elements such terms describe. Thus, these terms are not necessarily intended to indicate temporal or other prioritization of such elements. The terms "coupled" or "operably coupled" are defined as connected, although not necessarily directly, and not necessarily mechanically. The terms "a" and "an" are defined as one or more unless stated otherwise. The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a system, device, or apparatus that "comprises," "has," "includes" or "contains" one or more elements possesses those one or more elements but is not limited to possessing only those one or more elements. Similarly, a method or process that "comprises," "has," "includes" or "contains" one or more operations possesses those one or more operations but is not limited to possessing only those one or more operations.

## Claims

1. An electronic circuit, comprising:
first and second cores; and
a sensor coupled to the first and second cores, the sensor comprising: (a) a first threshold register coupled to a first hardware access filter, wherein the first hardware access filter allows the first core to access the first threshold register to the exclusion of the second core, and (b) a second threshold register coupled to second hardware access filter, wherein the second hardware access filter allows the second core to access the second threshold register to the exclusion of the first core.

2. The electronic circuit of claim 1, wherein the sensor further comprises a comparator coupled to an Analog-to-Digital Converter (ADC) and to the first and second threshold registers.

3. The electronic circuit of claim 2, wherein the sensor comprises an environmental sensor.

4. The electronic circuit of claim 2 or 3, wherein the comparator is configured to compare a sensor value obtained from the ADC against a threshold value stored in a selected one of the first or second threshold registers.

5. The electronic circuit of any of claims 2 to 4, wherein the sensor is configured to:
in response to a first comparison between a first value obtained by the ADC against a first threshold value stored in the first threshold register, output a first indication; or
in response to a second comparison between the first value or a second value obtained by the ADC against a second threshold value stored in the second threshold register, output a second indication.

6. The electronic circuit of claim 5, wherein the sensor is configured to send the first indication to the first core and send the second indication to the second core.

7. The electronic circuit of claim 5 or 6, wherein the sensor is configured to send the first indication to the second core and send the second indication to the first core.

8. The electronic circuit of any preceding claim, wherein the first and second cores are selected from the group consisting of: system, security, or safety cores.

9. The electronic circuit of claim 8, wherein the first core comprises a security core configured to write a fixed threshold value in the first threshold register, and wherein the second core comprises a system of safety core configured to write a variable threshold value in the second threshold register.

10. The electronic circuit of any preceding claim, wherein the first hardware access filter only allows write access to the first threshold register in response to a request comprising a bus master identifier (ID) of the first core, and wherein the second hardware access filter only allows write access to the second threshold register in response to a request comprising a bus master ID of the second core.

11. The electronic circuit of any preceding claim, further comprising a third core coupled to the sensor, wherein the first hardware access filter allows the first core to access the first threshold register to the exclusion of the third core, and wherein the second hardware access filter allows the second core to access the second threshold register to the exclusion of the third core.

12. The electronic circuit of claim 11, the sensor further comprising: (c) a third threshold register coupled to a third hardware access filter, wherein the third hardware access filter allows the third core to access the third threshold register to the exclusion of the first and second cores.

13. The electronic circuit of claim 12, wherein the third hardware access filter only allows write access to the third threshold register in response to a request comprising a bus master identifier (ID) of the third core.

14. A method, comprising:
receiving, at a first hardware access filter, a first request to write a first value onto a first threshold register of a temperature sensor shared between the first core and a second core; and
at least one of: (a) in response to the first request indicating an identity of the first core, writing the first value onto the first threshold register; or (b) in response to the first request indicating an identity of the second core, denying the request.

15. The method of claim 14, further comprising:
receiving, at a second hardware access filter, a second request to write a second value onto a second threshold register of the temperature sensor; and
at least one of: (a) in response to the second request indicating an identity of the second core, writing the second value onto the second threshold register; or (b) in response to the request indicating an identity of the first core, denying the second request.
